# EUROPEAN PATENT SPECIFICATION

(11) **EP 4 257 454 B1**
(45) Date of publication and mention of the grant of the patent: **11.12.2024**
(21) Application number: 23166357.6
(22) Date of filing: 03.04.2023
(51) Int. Cl.: B62D 21/02, B60K 1/04

(54) **ROAD VEHICLE WITH BATTERY MOUNTING ARRANGEMENT**
STRASSENFAHRZEUG MIT BATTERIEBEFESTIGUNG
VÉHICULE ROUTIER AVEC DISPOSITIF DE MONTAGE DE BATTERIE

(30) Priority: 04.04.2022 NL 2031489
(43) Date of publication of application: 11.10.2023
(73) Proprietor: DAF Trucks N.V., 5643 TW Eindhoven (NL)
(72) Inventor: VAN DER MEER, Patrick Quirien Adelheid, 5643 TW Eindhoven (NL); KERSTEN, Roel Lambertus Johannes, 5643 TW Eindhoven (NL)
(74) Representative: V.O.

(56) References cited:
- EP-A1- 3 925 807
- WO-A1-2019/001563
- WO-A1-2021/091448
- CN-A- 112 172 500
- DE-A1- 102020 004 795
- US-B1- 11 124 076

## Description

The invention relates to a road vehicle provided with an electric motor configured to at least partially propel the road vehicle, a vehicle battery configured to at least partially power the electric motor, a chassis, and a battery mounting system for mounting the vehicle battery to the chassis. The invention in particular relates to a road vehicle according to the preamble of claim 1.

### BACKGROUND

Of particular interest are heavy load road vehicles such as trucks. Trucks in general are used to transport heavy loads over long distances. Particularly in case of heavy duty long haulage applications so-called tractor semi-trailer combinations are used in which the tractor vehicle pulls and partly supports the payload that is packed onto the semi-trailer. In new generations of these trucks, batteries may provide an indispensable contribution to the electrification of the drive train, since they may provide needed electrical energy to the electric motor.

A vehicle battery can comprise a first and a second battery module, each comprising a battery box configured to hold and support several, usually identical battery packs,. These battery packs are typically assembled together in a box like arrangement that can be mounted on the truck in any one or more numbers. Each module can have a weight of 850 kg or more. Typically these battery packs are fragile and suffer from vibrations, shocks, and deformation.

A truck and in particular a tractor to pull a semi-trailer is conventionally built upon a chassis formed by two elongate beams along a length of the truck. Such a chassis comprising two longitudinal members connected by cross beams, is a so called ladder frame. The chassis is the central mounting base of the truck to interconnect all components of the truck together. Over the main suspension this chassis may be supported by the axles, in general a front and a rear axle. On the chassis may be mounted or suspended a truck cabin, the motor, and many other components. The chassis may also provide a base for mounting one or more battery modules. The latter may be placed outside the ladder frame between the front axle tire and the rear axle tire, or alternatively between the chassis beams between front and rear axle or even on top of the front axle where normally in a truck with a conventional driveline the internal combustion engine is situated.

A ladder frame has a slender shape resulting in an elasticity that allows attached components to swing and vibrate, when the truck is in motion. These vibrations may be damaging to the battery packs that are attached to the frame. The slender shape of the ladder frame also allows longitudinal twisting of the truck, due to the forces and vibrations when the truck is in motion. Such a twisting may also be detrimental to the battery packs that are attached to the frame.

European patent application EP 3.925.807 A1 discloses a road vehicle according to the preamble of claim 1 having a battery mounting system in which the battery box is hung by a three-point or pseudo-three-point-suspension on downwardly extending angled portions of triangularly shaped support brackets attached to the chassis. The mounting system comprises an elongated cross member connected between the triangularly shaped brackets on a respective side of the elongate beams, providing an increased stiffness for the battery module mounting system. However, in practice it appears that global twisting of the chassis still can occur, which means the battery packs may still be damaged.

Another example of a road vehicle provided with a vehicle battery comprising battery modules, and a chassis with first and second elongate chassis beams exhibiting inner and outer surfaces onto which the battery modules are mounted is disclosed in CN 112 172 500 A.

### SUMMARY

It is therefore an object of the invention to provide an alternative road vehicle and another object of the invention is to provide a road vehicle with an improved battery mounting system in which the stiffness for the battery module mounting system is further increased.

According to the invention at least one of these objectives is obtained by providing a road vehicle according to claim 1. By also connecting at least one elongated cross member to the inner sides of the first and the second elongate chassis beams additional stiffness is provided which results in less battery damage.

In an embodiment of a road vehicle according to the invention at least one of the elongated cross members comprises a cross beam attachment portion which is connected to a cross beam of the chassis. By in addition connecting at least one elongated cross member to a cross beam of the chassis further additional stiffness is provided which results in even less battery damage.

In a further embodiment of a road vehicle according to the invention the battery mounting system for each of the first and second battery module comprises:
- a first and a second front bracket connector, wherein the first and the second front bracket connectors are positioned adjacent each other at or near a middle of a front side of the respective battery box; and
- a third and a fourth posterior bracket connector, wherein the third and fourth posterior bracket connectors are spaced apart and connected to a posterior side of the respective battery box at or near opposite lateral sides of said respective battery box; and
wherein the first and the second front bracket connectors and third and the fourth posterior bracket connectors are situated at a same vertical height. In this manner a so-called pseudo-three-point suspension is obtained which provides for improved torsional flexibility while on the other hand additional safety is provided by redundancy. In addition, in case a third battery module is positioned in longitudinal direction behind and adjacent the first battery module, the closely positioned front bracket connectors of the third battery module can be arranged between the widely positioned posterior bracket connectors of the first battery module, thereby providing a more compact construction.

In another embodiment of a road vehicle according to the invention each of the bracket connectors is configured for providing a connection which is dynamically stiff in the translational directions and relatively weak in a rotational direction. Such a dynamically stiff suspension means that the eigenfrequencies of the battery box on the vehicle are put above 16Hz. The lower amount of vibration energy in the vehicle in the frequency range above 16Hz reduces the battery box dynamic response and therefore acceleration load due to component resonances. In particular, component resonances in the frequency range of the axle eigenfrequencies between 10 and 14Hz are to be avoided, because a high amount of vibrational energy is introduced into the chassis. Further, such a dynamically stiff suspension provides an advantageous low spring travel which reduces relative movement of the battery box with regard to the chassis. This latter amongst other things reduces the durability load on hoses and electric cables for purposes of e.g. cooling, communication between an ECU and high voltage connections that are connected between the chassis and the battery box.

In a still further embodiment of a road vehicle according to the invention each of the brackets is a triangularly shaped bracket comprising a chassis beam attachment portion for connecting the triangularly shaped bracket to an outer surface of an elongate chassis beam, an angled portion extending upwardly between a lower edge of the chassis beam attachment portion and an upper horizontal portion of the triangularly shaped bracket, wherein the same vertical height at which the bracket connectors are situated is positioned at the upper horizontal portion of the respective triangularly shaped bracket. The upper horizontal portion of such a triangularly shaped bracket in a simple mechanical manner provides the possibility of providing the same vertical height at which the bracket connectors are positioned while at the same time providing sufficient stiffness due to the angled portion thereof.

The invention in another aspect provides a road vehicle provided with an electric motor configured to at least partially propel the road vehicle, a vehicle battery at least comprising a first battery module, the battery module comprising battery packs configured to at least partially power the electric motor, and a chassis comprising a first elongate chassis beam and a second elongate chassis beam, both extending along a length of the road vehicle, each first and second elongate chassis beam comprising an inner surface and an outer surface, the inner surfaces of the first and second chassis beams facing each other, the outer surfaces of the first and second chassis beams facing away from each other, and at least one cross beam connecting the first elongate chassis beam and the second elongate chassis beam, wherein the first battery module is arranged on an outer surface of the first elongate chassis beam; wherein the road vehicle further comprises a battery mounting system for mounting the vehicle battery to the chassis, the battery mounting system for the first battery module comprises:
- a battery box configured to hold and support the battery packs of the battery module;
- a front bracket mounted to and projecting from the outer surface of the respective elongate chassis beam; and
- a posterior bracket mounted to and projecting from the outer surface of the respective elongate chassis beam such that the posterior bracket is spaced apart from the front bracket for receiving the respective battery box between the front bracket and the posterior bracket;
characterized in that the battery mounting system comprises:
- a first and a second front bracket connector, wherein the first and the second front bracket connectors are positioned adjacent each other at or near a middle of a front side of the battery box; and
- a third and a fourth posterior bracket connector, wherein the third and fourth posterior bracket connectors are spaced apart and connected to a posterior side of the battery box at or near opposite lateral sides of said battery box; and
wherein the first and the second front bracket connectors and third and the fourth posterior bracket connectors are situated at a same vertical height. This aspect of the invention is based on the insight that by already only positioning the first and second front bracket connectors adjacent each other a so-called pseudo-three-point suspension can be obtained which provides for improved torsional flexibility while on the other additional safety is provided due to redundancy.

In an embodiment of the road vehicle according to the invention, each of the bracket connectors is configured for providing a connection which is dynamically stiff in the translational directions and relatively weak in a rotational direction. Preferably, each of the brackets is a triangularly shaped bracket comprising a chassis beam attachment portion for connecting the triangularly shaped bracket to an outer surface of an elongate chassis beam, an angled portion extending upwardly between a lower edge of the chassis beam attachment portion and an upper horizontal portion of the triangularly shaped bracket, wherein the same vertical height at which the bracket connectors are situated is positioned at the upper horizontal portion of the respective triangularly shaped bracket.

In a further embodiment of the road vehicle according to the invention the vehicle battery comprising the first and at least a second battery module, said second battery module comprising battery packs configured to at least partially power the electric motor, wherein the second battery module is arranged on an outer surface of the second elongate chassis beam; wherein the battery mounting system for the second battery module comprises:
- a battery box configured to hold and support the battery packs of the battery module;
- a front bracket mounted to and projecting from the outer surface of the respective elongate chassis beam; and
- a posterior bracket mounted to and projecting from the outer surface of the respective elongate chassis beam such that the posterior bracket is spaced apart from the front bracket for receiving the second battery box between the front bracket and the posterior bracket;

Wherein the battery mounting system further comprises an elongated cross member which is connected between the front brackets on a respective side of the first and second elongate chassis beams and an elongated cross member which is connected between the posterior brackets on a respective side of the first and second elongate chassis beams, said at least one elongated cross member comprising a first inner chassis beam attachment portion for connecting the elongated cross member to an inner side of the first elongate chassis beam and a second inner chassis beam attachment portion for connecting the elongated cross member to an inner side of the second elongate chassis beam. Preferably, at least one of the elongated cross members comprises a cross beam attachment portion which is connected to a cross beam of the chassis.

The invention will be further explained with reference to the Figures, in which non-limiting exemplary embodiments of a road vehicle according to the invention are schematically shown.

### BRIEF DESCRIPTION OF THE FIGURES

Figure 1 shows in a perspective view a portion of a relevant part of a road vehicle in an embodiment according to the invention;
figure 2 shows a top view of the example of figure 1;
figure 3 shows an example of a zoomed in detail of a chassis with battery mounting system according to the invention, viewed from above;
figure 4 shows the example of figure 3 viewed from below; and
figure 5 shows an example of a part of a chassis with a battery mounting system and a first and a third battery box arranged in a row according to the invention.

### DETAILED DESCRIPTION

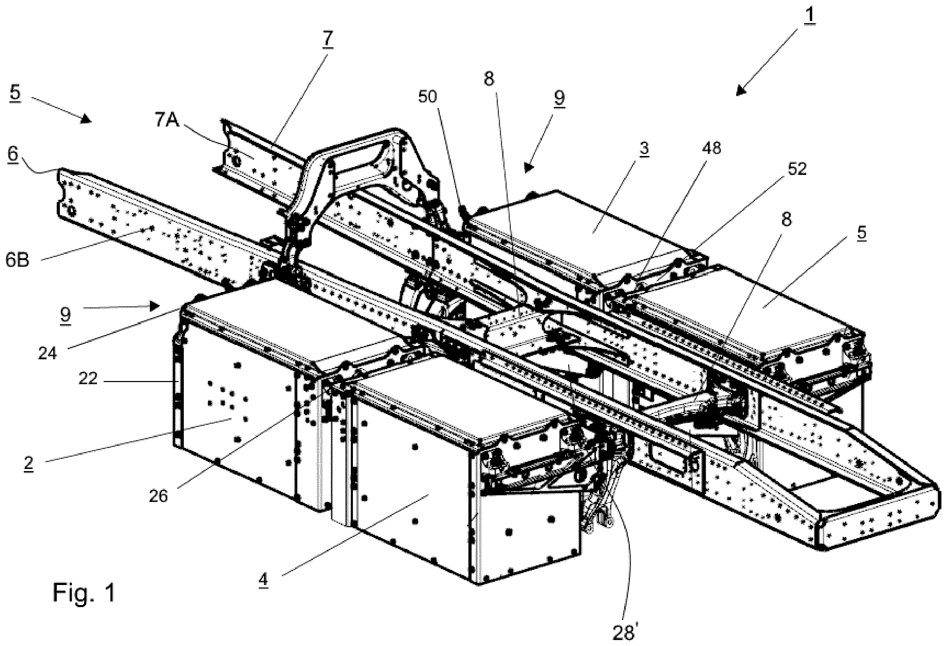

In figure 1 the relevant part of an embodiment of a road vehicle 1 according to the invention is schematically shown in perspective. The road vehicle 1 is provided with an electric motor (not shown but known in the art) configured to at least partially propel the road vehicle 1. In the embodiment shown in Figure 1, the road vehicle 1 has a vehicle battery comprising four battery modules 2, 3, 4, 5 each comprising battery packs configured to at least partially power the electric motor. It will be clear that the invention is not limited to the number of battery modules provided that at least two battery modules are present. The road vehicle 1 further comprises a chassis 5 comprising a first elongate chassis beam 6 and a second elongate chassis beam 7, both extending along a length of the road vehicle 1, and at least one cross beam 8 connecting the first elongate chassis beam 6 and the second elongate chassis beam 7. A front side of the road vehicle 1 is shown at the left hand side of the figure, whilst a rear side of the road vehicle 1 is shown at the right hand side of figure 1. The road vehicle 1 further comprises a battery mounting system 9 for mounting the vehicle battery to the chassis 5. Each of the first and second elongate chassis beam 6, 7 comprising an inner surface 6A, 7A and an outer surface 6B, 7B. the inner surfaces 6A, 7A of the first and second chassis beams 6, 7 facing each other while the outer surfaces 6B, 7B of the first and second chassis beams 6, 7 are facing away from each other. As e.g. can be seen in figure 1 a first battery module 2 and a second battery module 3 are arranged on a respective outer surface 6B, 7B of the first and second elongate chassis beam 6, 7, respectively, i.e. the battery modules 2 and 3 are positioned on the outer sides of the chassis beams 6, 7. Likewise a third battery module 4 and a fourth battery module 5 are arranged on a respective outer surface 6B, 7B of the first and second elongate chassis beam 6, 7, respectively, i.e. the battery modules 4 and 5 are positioned on the outer sides of the chassis beams 6, 7. For reasons of clarity it is observed that "horizontal" and "vertical" have the usual meaning referring to a normal operational mode in which the road vehicle 1 is supported on a horizontal road surface. Further, "front" and "rear" are defined in the manner that "front" refers to the normal driving direction of the road vehicle 1, which as shown in figure 1 is to the left.

For each of the battery modules 2, 3, 4 and 5 the battery mounting system 9 comprises a similar construction. Below the invention will be elucidated in more detail with regard to construction for the first and second battery module 2, 3.

The battery mounting system comprises a battery box 22 configured to hold and support the battery packs of the first battery module 2.

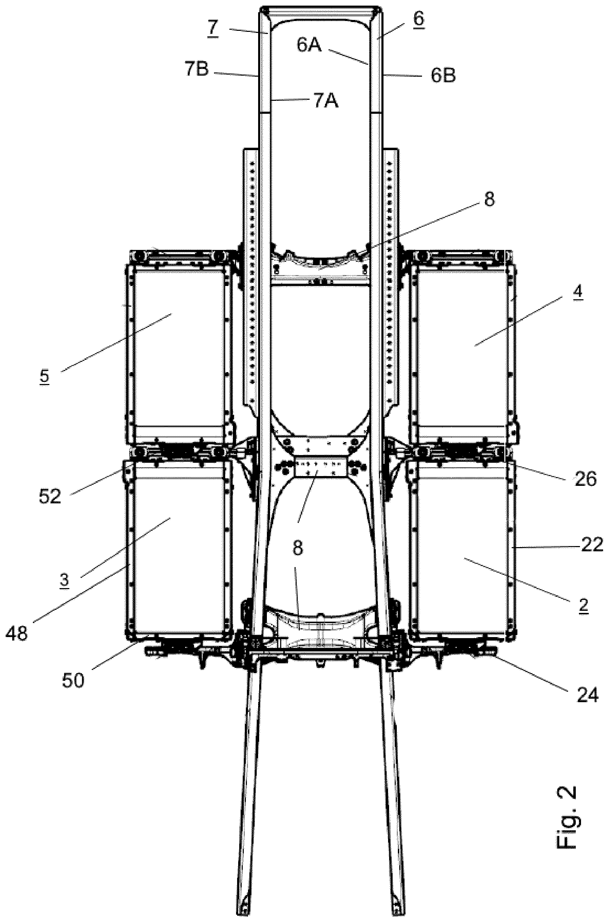

As can be seen in figures 1 and 2, for the first battery module 2 the battery mounting system 9 comprises a front bracket 24 mounted to and projecting from the first elongate chassis beam 6 away from the second elongate chassis beam 7 and a posterior bracket 26 mounted to and projecting from the first elongate chassis beam 6 away from the second elongate chassis beam 7. The posterior bracket 26 is spaced apart from the front bracket 24 for receiving the battery box 22 between the front bracket 24 and the bracket 26.

For the second battery module 3 the battery mounting system 9 comprises a front bracket 50 mounted to and projecting from the second elongate chassis beam 7 away from the first elongate chassis beam 6 and a posterior bracket 52 mounted to and projecting from the second elongate chassis beam 7 away from the first elongate chassis beam 6. The posterior bracket 52 is spaced apart from the front bracket 50 for receiving a second battery box 48 between the front bracket 50 and the posterior bracket 52.

The battery mounting system 9 further comprises an elongated cross member which is connected between the front brackets 24 and 50 on a respective side of the first and second elongate chassis beams 6, 7 and an elongated cross member 28' which is connected between the posterior brackets 26 and 52 on a respective side of the first and second elongate chassis beams 6, 7.

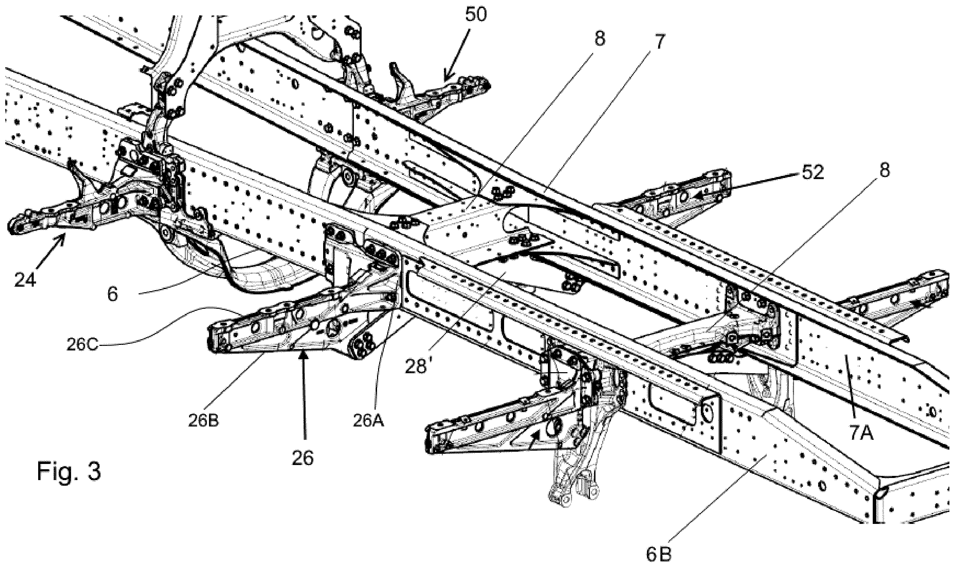

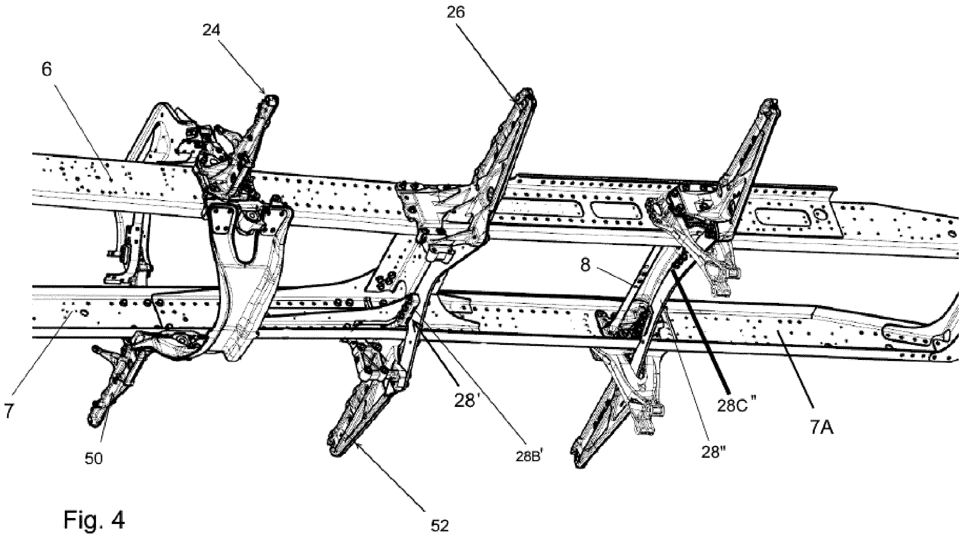

In figure 3 the battery mounting system 9 construction as shown in Figure 1 is shown but without the battery boxes and the battery packs to more clearly show the brackets and the elongated cross members. Figure 4 shows the embodiment of figure 3 but viewed from below.

As also can be seen in figure 3, each of the brackets (reference is made to bracket 26) is a triangularly shaped bracket comprising a chassis beam attachment portion 26A for connecting the triangularly shaped bracket 26 to the outer surface 6B of the elongate chassis beam 6, an angled portion 26B extending upwardly between the lower edge of the chassis beam attachment portion 26A and an upper horizontal portion 26C of the triangularly shaped bracket 26. As can be clearly seen in the embodiment of figure 4 the elongated cross member 28' comprises a second inner chassis beam attachment portion 28B' for connecting the elongated cross member 28' to an inner side 7A of the second elongate chassis beam 7 and a first inner chassis beam attachment portion for connecting the elongated cross member 28' to an inner side 6A of the first elongate chassis beam 6. In another embodiment a cross member 28" comprises a cross beam attachment portion 28C" which is connected to a cross beam 8 of the chassis 5, so that the cross member 28" is connected to both the inner sides 6A, 7A of the chassis beams as well as the cross beam 8.

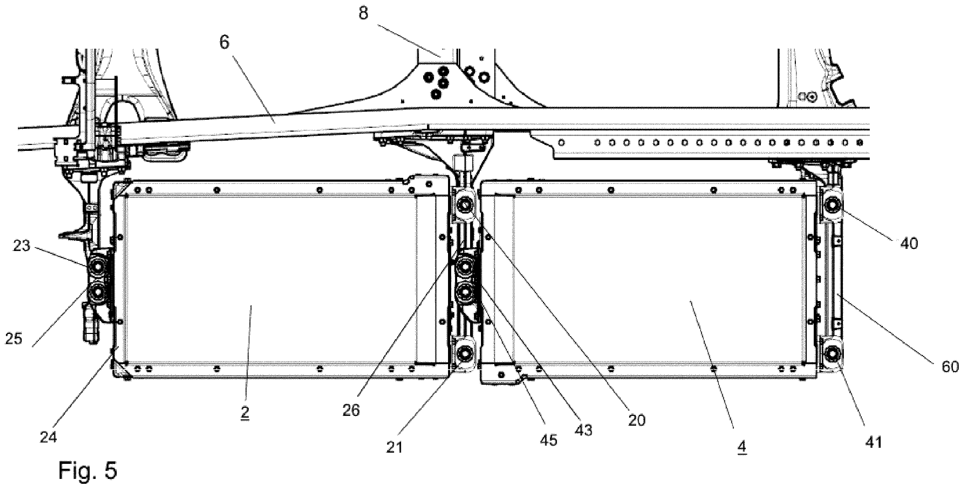

With reference to Figure 5 an embodiment of the road vehicle 1 according to the invention is shown in which the battery mounting system 9 comprises bracket connectors configured for providing a connection of the battery box to the brackets. Each of the bracket connectors provides a suspension which is dynamically stiff in the translational directions and relatively weak in a rotational direction. The arrangement of the bracket connectors will be described with reference to the first battery module 2 and the third battery module 4.

Each of the first and third battery module 2, 4 comprises a first and a second front bracket connector (23, 25; 43, 45), wherein the first and the second front bracket connectors (23, 25; 43, 45) are positioned at or near a middle of the respective front bracket (24; 26) and a third and a fourth posterior bracket connector (20, 21; 40, 41) connecting the respective battery box are arranged at or near opposite lateral side of the respective battery box. Please note that in the shown embodiment the front bracket of the third battery module 4 is formed by the posterior bracket 26 of the first battery module 2, which posterior bracket 26 then is also called center bracket. All the bracket connectors are situated at a same vertical height on the respective upper horizontal portion of the respective triangular shaped bracket 24, 26, 60. By positioning the first and second front bracket connectors adjacent each other a so-called pseudo-three-point suspension is obtained which provides for improved torsional flexibility. In addition, in case one of the first or second front bracket connectors is damaged the other one of the front bracket connectors may still be undamaged thereby providing additional safety due to redundancy . In addition, as can be seen in Figure 5, the closely positioned front bracket connectors 23, 25 of the first battery module 2 can be arranged between the widely positioned posterior bracket connectors 40, 41 of the third battery module 4, thereby providing a more compact construction.

## Claims

1. A road vehicle (1) provided with an electric motor configured to at least partially propel the road vehicle, a vehicle battery at least comprising a first and a second battery modules (2,3),
each battery module comprising battery packs configured to at least partially power the electric motor, and a chassis (5) comprising a first elongate chassis beam (6) and a second elongate chassis beam (7),
both extending along a length of the road vehicle, each first and second elongate chassis beam comprising an inner surface (6A, 7A) and an outer surface (6B, 7B),
the inner surfaces of the first and second chassis beams facing each other, the outer surfaces of the first and second chassis beams facing away from each other, and at least one cross (8) connecting the first elongate chassis beam and the second elongate chassis beam, wherein the first battery module and the second battery module are arranged on an outer surface of the first and second elongate chassis beam, respectively;
wherein the road vehicle further comprises a battery mounting system (9) for mounting the vehicle battery to the chassis, the battery mounting system for each of the first and second battery module comprises:
- a battery box (22) configured to hold and support the battery packs of the battery module;
- a front bracket (24) mounted to and projecting from the outer surface of the respective elongate chassis beam; and
- a posterior bracket (26) mounted to and projecting from the outer surface of the respective elongate chassis beam such that the posterior bracket is spaced apart from the front bracket for receiving the respective battery box between the front bracket and the posterior bracket;
the battery mounting system further comprises an elongated cross member which is connected between the front brackets on a respective side of the first and second elongate chassis beams and an elongated cross member (28') which is connected between the posterior brackets on a respective side of the first and second elongate chassis beams,
**characterized in that**
at least one elongated cross member (28') comprises a first inner chassis beam attachment portion for connecting the elongated cross member to an inner side (6A) of the first elongate chassis beam (6) and a second inner chassis beam attachment portion (28B') for connecting the elongated cross member to an inner side (7A) of the second elongate chassis beam (7).

2. The road vehicle according to claim 1, wherein at least one of the elongated cross members (28") comprises a cross beam attachment portion (28C") which is connected to the at least one cross beam (8) of the chassis.

3. The road vehicle according to claim 1 or 2, wherein the battery mounting system for each of the first and second battery module comprises:
- a first and a second front bracket connectors (23, 25; 43, 45), wherein the first and the second front bracket connectors are positioned adjacent each other at or near a middle of a front side of the respective battery box; and
- a third and a fourth posterior bracket connectors (20, 21; 40, 41), wherein the third and fourth posterior bracket connectors are spaced apart and connected to a posterior side of the respective battery box at or near opposite lateral sides of said respective battery box; and
wherein the first and the second front bracket connectors and third and the fourth posterior bracket connectors are situated at a same vertical height.

4. The road vehicle according to claim 3, wherein each of the bracket connectors is configured for providing a connection which is dynamically stiff in the translational directions and relatively weak in a rotational direction.

5. The road vehicle according to claim 3 or 4, wherein each of the brackets is a triangularly shaped bracket (24, 26, 60) comprising a chassis beam attachment portion (26A) for connecting the triangularly shaped bracket to an outer surface (6A) of an elongate chassis beam (6), an angled portion (26B) extending upwardly between a lower edge of the chassis beam attachment portion (26A) and an upper horizontal portion (26C) of the triangularly shaped bracket, wherein the same vertical height at which the bracket connectors are situated is positioned at the upper horizontal portion of the respective triangularly shaped bracket.

## Patentansprüche

1. Straßenfahrzeug (1), ausgestattet mit einem Elektromotor, dazu konfiguriert, das Straßenfahrzeug mindestens teilweise anzutreiben, einer Fahrzeugbatterie, umfassend mindestens ein erstes und ein zweites Batteriemodul (2, 3), jedes Batteriemodul, umfassend Batteriepacks, die zum mindestens teilweisen Antrieb des Elektromotors konfiguriert sind, und einem Fahrgestell (5), umfassend einen ersten länglichen Fahrgestellträger (6) und einen zweiten länglichen Fahrgestellträger (7), die sich beide entlang einer Länge des Straßenfahrzeugs erstrecken, jeder erste und zweite längliche Fahrgestellträger, umfassend eine Innenfläche (6A, 7A) und eine Außenfläche (6B, 7B), wobei die Innenflächen des ersten und zweiten Fahrgestellträgers einander zugewandt sind, die Außenflächen des ersten und zweiten Fahrgestellträgers voneinander abgewandt sind, und mindestens ein Kreuz, das den ersten länglichen Fahrgestellträger und den zweiten länglichen Fahrgestellträger verbindet, wobei das erste Batteriemodul und das zweite Batteriemodul auf einer Außenfläche des ersten bzw. zweiten länglichen Fahrgestellträgers angeordnet sind;
wobei das Straßenfahrzeug ferner ein Batteriebefestigungssystem (9) zum Befestigen der Fahrzeugbatterie am Fahrgestell umfasst, wobei das Batteriebefestigungssystem für jedes von dem ersten und zweiten Batteriemodul umfasst:
- einen Batteriekasten (22), dazu konfiguriert, die Batteriepacks des Batteriemoduls zu halten und zu stützen;
- eine vordere Halterung (24), montiert an der Außenfläche des jeweiligen länglichen Fahrgestellträgers und von dieser vorstehend; und
- eine hintere Halterung (26), montiert an der Außenfläche des jeweiligen länglichen Fahrgestellträgers und von dieser vorstehend, sodass die hintere Halterung von der vorderen Halterung zum Aufnehmen des jeweiligen Batteriekastens zwischen der vorderen Halterung und der hinteren Halterung beabstandet ist;
wobei das Batteriebefestigungssystem ferner einen länglichen Querträger umfasst, der zwischen den vorderen Halterungen auf einer jeweiligen Seite des ersten und zweiten länglichen Fahrgestellträgers und einem länglichen Querträger (28') verbunden ist,
der zwischen den hinteren Halterungen auf einer entsprechenden Seite des ersten und zweiten länglichen Fahrgestellträgers verbunden ist,
**dadurch gekennzeichnet, dass**
mindestens ein länglicher Querträger (28') einen ersten inneren Fahrgestellträgerbefestigungsabschnitt zum Verbinden des länglichen Querträgers mit einer Innenseite (6A) des ersten länglichen Fahrgestellträgers (6) und einen zweiten inneren Fahrgestellträgerbefestigungsabschnitt (28B') zum Verbinden des länglichen Querträgers mit einer Innenseite (7A) des zweiten länglichen Fahrgestellträgers (7) umfasst.

2. Straßenfahrzeug nach Anspruch 1, wobei mindestens einer der länglichen Querträger (28") einen Querträgerbefestigungsabschnitt (28C") umfasst, der mit dem mindestens einen Träger (8) des Fahrgestells verbunden ist.

3. Straßenfahrzeug nach Anspruch 1 oder 2, wobei das Batteriebefestigungssystem für jedes von dem ersten und zweiten Batteriemodul umfasst:
- einen ersten und einen zweiten vorderen Halterungsverbinder (23, 25; 43, 45), wobei die ersten und der zweiten vorderen Halterungsverbinder einander benachbart an oder in der Nähe einer Mitte einer Vorderseite des jeweiligen Batteriekastens positioniert sind; und
- einen dritten und einen vierten hinteren Halterungsverbinder (20, 21; 40, 41), wobei die dritten und vierten hinteren Halterungsverbinder voneinander beabstandet sind und mit einer hinteren Seite des jeweiligen Batteriekastens an oder in der Nähe gegenüberliegender lateraler Seiten des jeweiligen Batteriekastens verbunden sind; und
wobei die ersten und zweiten vorderen Halterungsverbinder und die dritten und vierten hinteren Halterungsverbinder auf einer selben vertikalen Höhe angeordnet sind.

4. Straßenfahrzeug nach Anspruch 3, wobei jeder der Halterungsverbinder dazu konfiguriert ist, eine Verbindung bereitzustellen, die in den translatorischen Richtungen dynamisch steif und in einer Drehrichtung relativ schwach ist.

5. Straßenfahrzeug nach Anspruch 3 oder 4, wobei jede der Halterungen eine dreiecksförmige Halterung (24, 26, 60) ist, umfassend einen Fahrgestellträgerbefestigungsabschnitt (26A) zum Verbinden der dreiecksförmigen Halterung mit einer Außenfläche (6A) eines länglichen Fahrgestellträgers (6), wobei sich ein abgewinkelter Abschnitt (26B) zwischen einer Unterkante des Fahrgestellträgerbefestigungsabschnitts (26A) und einem oberen horizontalen Abschnitt (26C) der dreiecksförmigen Halterung nach oben erstreckt, wobei die gleiche vertikale Höhe, in der die Halterungsverbinder angeordnet sind, am oberen horizontalen Abschnitt der jeweiligen dreiecksförmigen Halterung positioniert ist.

## Revendications

1. Véhicule routier (1) équipé d'un moteur électrique configuré pour propulser au moins partiellement le véhicule routier, d'une batterie de véhicule comprenant au moins des premier et second modules de batterie (2, 3), chaque module de batterie comprenant des blocs batteries configurés pour alimenter au moins partiellement le moteur électrique, et d'un châssis (5) comprenant une première poutre de châssis allongée (6) et une seconde poutre de châssis allongée (7), toutes deux s'étendant sur une longueur du véhicule routier, chacune des première et seconde poutres de châssis allongées comprenant une surface intérieure (6A, 7A) et une surface extérieure (6B, 7B), les surfaces intérieures des première et seconde poutres de châssis étant orientées l'une vers l'autre, les surfaces extérieures des première et seconde poutres de châssis étant orientées à l'opposé l'une de l'autre, et au moins une traverse (8) reliant la première poutre de châssis allongée et la seconde poutre de châssis allongée, dans lequel le premier module de batterie et le second module de batterie sont agencés sur une surface extérieure des première et seconde poutres de châssis allongées, respectivement ;
dans lequel le véhicule routier comprend en outre un système de montage de batterie (9) pour monter la batterie de véhicule sur le châssis, le système de montage de batterie pour chacun des premier et second modules de batterie comprend :
- un boîtier de batterie (22) configuré pour maintenir et supporter les blocs batteries du module de batterie ;
- un support avant (24) monté sur la surface extérieure de la poutre de châssis allongée respective, et faisant saillie à partir de celle-ci ; et
- un support postérieur (26) monté sur la surface extérieure de la poutre de châssis allongée respective, et faisant saillie à partir de celle-ci, de sorte que le support postérieur est espacé du support avant pour recevoir le boîtier de batterie respectif entre le support avant et le support postérieur ;
le système de montage de batterie comprend en outre un élément transversal allongé qui est connecté entre les supports avant sur un côté respectif des première et seconde poutres de châssis allongées et un élément transversal allongé (28') qui est connecté entre les supports postérieurs sur un côté respectif des première et seconde poutres de châssis allongées,
**caractérisé en ce que**
au moins un élément transversal allongé (28') comprend une première partie de fixation de poutre de châssis intérieure pour connecter l'élément transversal allongé à un côté intérieur (6A) de la première poutre de châssis allongée (6) et une seconde partie de fixation de poutre de châssis intérieure (28B') pour connecter l'élément transversal allongé à un côté intérieur (7A) de la seconde poutre de châssis allongée (7).

2. Véhicule routier selon la revendication 1, dans lequel au moins un des éléments transversaux allongés (28") comprend une partie de fixation de poutre transversale (28C") qui est connectée à ladite au moins une poutre transversale (8) du châssis.

3. Véhicule routier selon la revendication 1 ou 2, dans lequel le système de montage de batterie pour chacun des premier et second modules de batterie comprend :
- des premier et deuxième connecteurs de support avant (23, 25 ; 43, 45), dans lequel les premier et deuxième connecteurs de support avant sont positionnés de manière adjacente l'un à l'autre au niveau ou à proximité d'un milieu d'un côté avant du boîtier de batterie respectif ; et
- un troisième et un quatrième connecteurs de support postérieur (20, 21 ; 40, 41), dans lequel les troisième et quatrième connecteurs de support postérieur sont espacés et connectés à un côté postérieur du boîtier de batterie respectif au niveau ou à proximité de côtés latéraux opposés dudit boîtier de batterie respectif ; et
dans lequel les premier et deuxième connecteurs de support avant et les troisième et quatrième connecteurs de support postérieur sont situés à une même hauteur verticale.

4. Véhicule routier selon la revendication 3, dans lequel chacun des connecteurs de support est configuré pour fournir une connexion qui est dynamiquement rigide dans les directions de translation et relativement faible dans une direction de rotation.

5. Véhicule routier selon la revendication 3 ou 4, dans lequel chacun des supports est un support de forme triangulaire (24, 26, 60) comprenant une partie de fixation de poutre de châssis (26A) pour connecter le support de forme triangulaire à une surface extérieure (6A) d'une poutre de châssis allongée (6), une partie inclinée (26B) s'étendant vers le haut entre un bord inférieur de la partie de fixation de poutre de châssis (26A) et une partie horizontale supérieure (26C) du support de forme triangulaire, dans lequel la même hauteur verticale à laquelle sont situés les connecteurs de support est positionnée au niveau de la partie horizontale supérieure du support de forme triangulaire respectif.
